(19) 

Europäisches
Patentamt
European
Patent Office
Office européen
des brevets

(11) **EP 1 706 204 B1**

(12) **EUROPEAN PATENT SPECIFICATION**

(45) Date of publication and mention
of the grant of the patent:
**06.01.2010 Bulletin 2010/01**

(21) Application number: **04798322.6**

(22) Date of filing: **24.11.2004**

(51) Int Cl.:
*B01J 23/40* $^{(2006.01)}$        *B01J 37/02* $^{(2006.01)}$

(86) International application number:
**PCT/FI2004/000713**

(87) International publication number:
**WO 2005/051535 (09.06.2005 Gazette 2005/23)**

(54) **CATALYST AND METHOD FOR THE PREPARATION THEREOF**

KATALYSATOR UND HERSTELLUNGSVERFAHREN DAFÜR

CATALYSEUR ET MODE DE FABRICATION

(84) Designated Contracting States:
**AT BE BG CH CY CZ DE DK EE ES FI FR GB GR
HU IE IS IT LI LU MC NL PL PT RO SE SI SK TR**

(30) Priority: **27.11.2003 FI 20031734**

(43) Date of publication of application:
**04.10.2006 Bulletin 2006/40**

(73) Proprietor: **Neste Oil Oyj
02150 Espoo (FI)**

(72) Inventors:
• **TIITTA, Marja
FI-06150 PORVOO (FI)**
• **LINDBLAD, Marina
FI-00120 Helsinki (FI)**
• **NIEMI, Vesa
FI-06400 PORVOO (FI)**

(74) Representative: **Hakkila, Maini Annika et al
Forssén & Salomaa Oy
Lautatarhankatu 8 B
00580 Helsinki (FI)**

(56) References cited:
**WO-A1-00/40676        WO-A1-02/08156
WO-A1-91/10510        US-A1- 2001 048 970
US-B1- 6 235 962**

• **LASHDAF M. ET AL.: 'Deposition of palladium
and ruthenium beta-diketonates on alumina and
silica supports in gas and liquid phase' APPLIED
CATALYSIS A: GENERAL, [Online] vol. 241, 2003,
pages 51 - 63, XP004409336 Retrieved from the
Internet: <URL:http://www.sciencedirect.com>**
• **DOSSI C. ET AL.: 'Chemical vapor deposition of
platinum hexafluoroacetylacetonate inside KL
zeolite: a new route to nonacidic platinum-in-
zeolite catalysts' JOURNAL OF CATALYSIS vol.
145, 1994, pages 377 - 383, XP002985208**
• **BOURANE A. ET AL.: 'Heats of adsorption of the
linear CO species on Pt/Al2O3 using infrared
spectroscopy: impact of the Pt dispersion'
JOURNAL OF CATALYSIS, [Online] vol. 218,
2003, pages 447 - 452, XP004438076 Retrieved
from the Internet: <URL:http:
//www.sciencedirect.com>**

## Description

### Field of the invention

The present invention relates to a noble metal catalyst, to a method for the preparation thereof based on gas phase technique, to the use of the catalyst in ring-opening, reactions, and to a method for the manufacture of middle distillates.

### Background of the invention

It is well known in the state of the art that noble metal catalysts are active in hydrocarbon reforming, isomerisation, isodewaxing, dehydrogenation and hydrogenation reactions. Commercially available noble metal catalysts typically consist of platinum, palladium, ruthenium, rhodium, iridium or mixtures thereof.

Supported noble metal catalysts are traditionally prepared in liquid phase by impregnation or ion-exchange technique. Only a few reports on the deposition of noble metals from gas phase on porous support materials, in the preparation of heterogeneous catalysts, are known from the literature. Vaporised noble metal precursors are most commonly deposited intact, usually by physisorption/condensation, on the support surface and afterwards decomposed to form metallic particles, or they are thermally or chemically decomposed during deposition.

Dossi et al. (J. Catal. 145 (1994) 377-383) have introduced reductive decomposition of volatile organometallic precursors inside zeolites, a two-step process where the organometallic precursor was first deposited intact inside zeolite cages and then decomposed under controlled reduction conditions to metal particles. When Pt/KL catalysts were prepared from platinum hexafluoro acetylacetonate, small metal particles (maximum diameter 7-8 Å) were formed inside the zeolite cages. In Pd/NaY catalysts prepared from $Pd(C_3H_5)(C_5H_5)$ large Pd particles filling zeolite supercages were formed (J. Catal. 149 (1994) 92-99). An advantage of this organometallic chemical vapour deposition (CVD) procedure, when compared to ion-exchange procedures, is that no acidic sites are formed in the zeolite upon reduction.

A method for producing Pd/Au shell catalysts by a CVD process is disclosed in WO 99/67022. Evaporable Pd/Au precursors form metal particles on the support surface either during the deposition or afterwards by thermal or chemical reduction. The thickness of the shell containing the metal particles is controlled by process parameters.

Lashdaf et al. (Appl. Catal. A241 (2003) 51-63) present a different approach, where vaporised Pd and Ru beta-diketonates were deposited on alumina and silica supports in gas-solid reactions. In this technique, the reaction temperature was kept high enough to ensure chemisorption of the metal precursor, and the reactions were allowed to proceed until saturation of the surface was achieved. This reactive interaction with the support surface generally leads to well-dispersed species. The reactive interaction of a vaporisable noble metal precursor with a support has also been utilized by Mu et al. (Appl. Catal. A248 (2003) 85-95).

The use of saturating gas-solid reactions in a gas phase process, for the manufacture of a heterogeneous catalyst, is disclosed in WO 91/10510. Said process comprises an optional pre-treatment step wherein the support, which may be an inorganic oxide, such as alumina or silica, or a zeolite, is thermally and/or chemically treated in order to provide the desired binding sites for the catalytically active component that is to be bound to the support. Then the surface activated support is contacted and allowed to interact with vapour containing the catalytically active species or its precursor at conditions ensuring that saturating gas-solid reactions take place, i.e. by providing the precursor in an excess relative to the amount of binding sites on the support and by maintaining the reaction temperature at a sufficiently high level to attain chemisorption of the precursor to the binding sites of the support. Then an optional post-treatment follows, which may comprise a heat-treatment step carried out at oxidizing or reducing conditions. Zeolite-supported zinc, alumina-supported rhenium and silica-supported chromium are mentioned as main groups.

A similar, improved gas phase method for the manufacture of a heterogeneous catalyst, based on saturating gas-solid reactions, is presented in FI 913438. It discloses control methods that can be employed in saturating reactions to attain a desired content of the active metal species. Said process comprises an optional pre-treatment step wherein the support is thermally and/or chemically treated. The chemical treatment may comprise treating the support with an inhibiting reagent, such as hexamethyl disilazane, which deactivates a portion of the available surface bonding sites, or a reagent, such as water, which increases the number of available surface bonding sites.

Noble metal catalysts are chemically stable, easy to store and handle. Mechanical stability and formability lie mainly on the support used in the catalyst. Noble metal catalysts are widely used in oil refining and in chemical and pharmaceutical industry in several reactions like hydrocarbon reforming, isomerisation, isodewaxing, dehydrogenation, hydrogenation and dry reforming processes.

Said reactions are defined generally in the following. Hydrocarbon reforming reactions typically comprise aromatics and hydrogen formation as well as isomerisation. In olefin isomerisation processes double bond isomerisation and skeletal isomerisation take place, in addition to side reactions such as cracking and dimerisation. The desired reaction in n-paraffin isomerisation processes is isomerisation of n-paraffins to isoparaffins. Isodewaxing processes comprise isomerising of wax molecules, and in dehydrogenation reactions olefins are produced from paraffins. Hydrogenation processes comprise addition of hydrogen into a molecule, and thus olefins and diolefins are hydrogenated to paraffins and olefins, respectively, and aromatics to naphthenes. In dry reforming reactions methane and carbon dioxide react to produce hydrogen and carbon monoxide.

Carbon monoxide is an important reactant in many processes, such as the Fischer-Tropsch synthesis and the process for the manufacture of methanol. The required carbon monoxide and hydrogen may be prepared by dry reforming technique utilizing carbon dioxide and paraffins as reactants and by steam reforming technique using water and paraffins as reactants and a catalyst for said carbon monoxide activating reactions comprises nickel, rhodium, ruthenium, palladium, platinum or mixtures thereof on a support.

Various ring-opening catalysts and processes have been proposed in the state of the art. A catalyst for ring-opening reactions of cyclic organic compounds is presented in US 6,235,962. The catalyst comprises a catalytically active metal selected from platinum, palladium, rhodium, rhenium, iridium, ruthenium, nickel, cobalt and mixtures or combinations thereof, a metal modifier selected from tungsten, molybdenum, lanthanum and rare earth metals and mixtures and combinations thereof, on a carrier selected from alumina, silica, zirconia and mixtures thereof. Said catalysts are efficient heterogeneous catalysts for ring-opening reactions of cyclic compounds in the presence of hydrogen. Cyclic compounds include derivatives of cyclopentane, cyclohexane, decalin, indane, indene, benzene and naphthalene present in diesel fuel.

A naphthalene ring-opening catalyst for forming high cetane number distillates having high degree of linear paraffins is disclosed in WO 00/08156. The catalyst comprises iridium and an effective amount of metals of group VIII, such as platinum, rhodium and/or ruthenium. The catalyst composition is especially effective in opening compounds containing $C_6$ naphthene rings to $C_5$ naphthene rings bearing at least one tertiary carbon.

WO 00/08157 discloses a catalyst system comprising naphthene ring-isomerising catalyst (50-90 %) and naphthene ring-opening catalyst (50-10 %). The isomerising catalyst contains a specific metal supported on a first catalyst support for isomerising compounds containing $C_6$ naphthene rings to $C_5$ naphthene rings, preferably platinum or palladium on alumina. The naphthene ring-opening catalyst contains another specific metal on a second catalyst support, for ring-opening compound containing naphthene rings, preferably iridium on alumina.

WO 00/08158 teaches the use of a catalyst for naphthenic ring-opening of distillates, comprising group VIII metal e.g. iridium, platinum, palladium, rhodium and/or ruthenium, supported on a substrate (e.g. alumina modified with magnesium) having at least one group IB, IIB and IVA metal in an amount effective to moderate cracking of naphthene ring containing feed to form methane. The catalyst also suppresses dealkylation of any pendant substituents optionally present in the ring structure. The catalyst exhibits desirable tertiary bond cleavage activity. Said method provides relatively high contents of linear and less branched paraffins and the preferred ring-opening catalyst compositions are Ir-Cu, Ir-Sn, Pt-Ir-Sn, Pt-Cu and Pt-Sn.

The use of a catalyst composition comprising iridium is disclosed in WO 02/07881. Said catalyst composition is useful for altering the range of tertiary carbon sites in naphthene or naphthenic ring containing distillates, in order to form products with a higher degree of linear paraffin functionality. Particularly the composition is effective in ring-opening compounds containing $C_5$ and $C_6$ naphthene rings bearing at least one tertiary carbon. The catalyst composition comprises iridium, which is supported on a composite support of an alumina component and acidic silica alumina molecular sieve component. Alternatively, at least one other or second group VIII metal selected from platinum, ruthenium and rhodium can be added to the iridium containing catalyst.

A two-stage process for producing diesel fuel with increased cetane number and particularly for selective naphthenic ring-opening reactions is disclosed in US 2002/0121457. In said process the first stage comprises a hydrotreating stage for removing sulphur from the feed and the second stage is the selective ring-opening stage. The ring-opening catalyst is an extremely low acidic catalyst having a high selectivity to middle distillate, containing highly dispersed platinum. Preferably the catalyst contains a crystalline molecular sieve material component and a group VIII noble metal component. The crystalline molecular sieve component is a large pore zeolite having an alpha-acidity of less than 1, and zeolite USY is mentioned as the preferred crystalline molecular sieve material. The group VIII noble metal component can be platinum, palladium, iridium, rhodium or a combination thereof. The ultra low acidity of the catalysts permits the cracking of only carbon-carbon bonds without secondary cracking and hydroisomerisation of desired paraffins for diesel fuel.

It is known from the state of the art relating to diesel fuels that the quality can be improved and the volume can be increased by ring-opening of naphthenes and further, the production of diesel fuels from naphthenic crude oils can be increased. The general reaction for converting naphthenes to paraffins is referred to herein as a ring-opening reaction. The cetane number of n-paraffins and slightly branched paraffinic components in the diesel region is higher and the density is lower than that of the corresponding naphthenic components. Although the hydrogenation of aromatics of middle distillates increases remarkably the cetane number and effects also in some extent on particle emissions, the opening of naphthenic rings brings additional advantage.

Middle distillate is a mixture of different hydrocarbons comprising typically molecules with carbon numbers C9 - C21 and the typical boiling range of middle distillate is between 432 - 623 K. Middle distillate contains usually aromatics, paraffins and naphtenes.

The reaction from naphthenes to paraffins can also be applied in the production of base oils and in the improvement of the quality of solvents. The quality of crude oils used in oil refineries in the production of base oils effects on the viscosity index and on the viscosity of the obtained products. By opening of naphthenic rings the viscosity index of lube oils can also be increased. Further, as naphthenic components may cause undesired odours in solvents, by opening naphthenic rings it is possible to decrease the odour and improve the quality of solvents.

WO 00/40676 teaches a process for producing of diesel fuel with increased cetane number from hydrocarbon feedstock. The process includes contacting the feedstock with a catalyst, which has large pore crystalline molecular sieve material component having faujasite structure and alpha acidity of less than 1. The catalyst contains a dispersed Group VIII noble metal component which catalyses the hydrogenation/hydrocracking of the aromatic and naphthenic species in the feedstock and the preferred catalyst combination is platinum/USY. The cetane number of the fraction boiling above 477 K was improved from 63 to 65-69.

WO 02/07877 discloses a process for opening naphthenic rings of naphthenic ring containing compounds with catalysts comprising at least one group VIII metal selected from iridium, platinum, rhodium and ruthenium wherein these metals are supported on an alkali metal or alkaline earth metal modified support. Said catalysts can be used to provide a reduced number of ring structures in the product stream, to minimize dealkylation of any pendant substituents optionally present in the ring structure and to increase the volume of the product. The catalyst is particularly beneficial in converting naphthene feed containing $C_6$ naphthene ring containing composition, wherein the $C_6$ ring contains at least one tertiary carbon site, to a product containing a substantial quantity of linear and less branched paraffin compounds. The group VIII metal is supported on a substrate containing an effective amount of an alkali metal or alkaline-earth metal and the substrate is desirably a refractory inorganic oxide, preferably with lower acidity, such as alumina.

The distribution and dispersion of metal particles on a support material are important properties, which affect the behaviour of noble metal catalysts in hydrocarbon reactions. Mostly, highly dispersed metal particles on suitable support materials are a prerequisite for highly active noble metal catalysts. However, well-dispersed metal particles may show different behaviour due to variations in their electronic and/or geometric properties. Since noble metals are commonly present in very low concentrations in heterogeneous catalysts, said properties are difficult to measure directly.

Indirect measurements using probe molecules are in many cases more sensitive and they can be used for monitoring even small variations in the properties of metal particles.

Formation of carbon dioxide during adsorption of carbon monoxide at a temperature below 300 K is a reaction, which so far has not been observed to be activated on noble metal catalysts, as was confirmed by Bourane and Bianchi (J. Catal. 218 (2003) 447-452).

From the state of the art it can be seen that the cleavage of carbon-carbon bond inside the naphthene ring is not an easy reaction and it leads very readily to secondary cracking reactions. Thus there is an evident need for a selective noble metal catalyst with improved performance in the process involving the cleavage of carbon-carbon bond inside the naphthene ring. There is also an increasing demand for paraffinic solvents, arising from their low toxicity and biodegradability.

**Object of the invention**

An object of the invention is to provide a selective noble metal catalyst for hydrocarbon conversion reactions such as ring-opening, isomerisation, alkylation, hydrocarbon reforming, dry reforming, hydrogenation and dehydrogenation reactions, and particularly for ring-opening of naphthenic molecules.

A further object of the invention is a method for the manufacture of a selective noble metal catalyst for hydrocarbon conversion reactions such as ring-opening, isomerisation, alkylation, hydrocarbon reforming, dry reforming, hydrogenation and dehydrogenation reactions, and particularly for ring-opening of naphthenic molecules.

A further object of the invention is the use of a selective noble metal catalyst in ring-opening, reactions, and particularly in ring-opening of naphthenic molecules.

A still further object of the invention is a process for the manufacture of middle distillate diesel fuel using a selective noble metal catalyst for ring-opening of naphthenes with two and multiple rings in middle distillate, particularly to manufacture corresponding isoparaffins, n-paraffins and mononaphthenes in the middle distillate region.

The characteristic features of the catalysts, of the method for the manufacture of the catalyst, of the use of the catalyst and of the process for the manufacture of middle distillate diesel fuel are provided in the claims.

**Summary of the invention**

The present invention relates to a method for the manufacture of a selective noble metal catalyst comprising a noble metal catalyst on a support, wherein the noble metal and the support are active, or the noble metal is active.

The method for the manufacture of said selective noble metal catalyst comprises use of gas phase technique. The selective noble metal catalyst manufactured according to the invention can be used as a catalyst in hydrocarbon conversion reactions, such as ring-opening, isomerisation, alkylation, hydrocarbon reforming, dry reforming, hydrogenation and dehydrogenation reactions. The method for the manufacture of middle distillate diesel fuels comprises the use of the selective noble metal catalyst in the process.

**Detailed description of the invention**

Surprisingly it has been found that a selective noble metal catalyst can be obtained, comprising a noble metal catalyst on a support, wherein the noble metal and the support are active, or the noble metal is active, using gas phase technique. According to the invention the selective noble metal catalyst comprises a group VIII metal selected from platinum, palladium, ruthenium, rhodium, iridium or mixtures or combinations thereof, preferably platinum, on a support and the catalyst activates carbon monoxide at temperature below 323 K.

The support is selected from zeolites, inorganic oxides, carbon related materials and mixtures and combinations thereof. Acidic support materials are also catalytically active.

The zeolite is selected from medium or large pore zeolites having acid sites, preferably large pore zeolites having weak or medium strength of acid sites. Particularly suitable zeolite materials are mesoporous aluminosilicates, such as MCM-41, crystalline aluminosilicates, such as Y- and beta-zeolites, and mordenites, crystalline aluminophosphates, such as AlPO-5 and AlPO-11, as well as crystalline aluminosilicophosphates, such as SAPO-5 and SAPO-11.

The inorganic oxide is selected from silicon oxide, aluminum oxide, titanium oxide, zirconium oxide, tungsten oxide, magnesium oxide and any mixtures thereof and preferably from silicon oxide and aluminum oxide.

The carbon related material is selected from activated carbon, graphite and carbon nanotubes.

The method for the manufacture of the noble metal catalyst comprises the following steps:

a) pre-treatment of the support at a temperature between 423 - 1173 K and optional modification of the support;
b) deposition of the noble metal comprising vaporisation of the noble metal precursor and reaction with the support, and
c) final handling.

The noble metal is deposited on the support by gas phase deposition technique. As a preferable embodiment, the gas phase technique is based on gas-solid reactions. The selection of the noble metal precursor is an important feature, as the noble metal precursor should not decompose thermally during the vaporisation and it should also be stable enough to withstand heating to the reaction temperature. The volatile metal compounds used as precursors in the gas phase preparation are selected from beta-diketonates, and metallocenes, such as $(CH_3)_3(CH_3C_5H_4)Pt$. The precursor may be a liquid, solid, or gas at room temperature.

Accordingly, the metal is deposited on the support by gas phase deposition using a corresponding metal precursor. The processing is carried out at ambient or reduced pressure depending on the precursor, in the presence of an inert carrier gas, such as nitrogen, helium, argon, methane or the like.

In the first process step the support is pre-treated at a temperature of 423 - 1173 K. A pressure in the range of ambient to reduced pressure may be used. When saturating gas-solid reactions are utilised, the amount of the metal deposited can be minimised in the optional modification step by blocking part of the available surface sites on the support.

The optional modification to modify the support surface can be carried out by depositing a blocking agent on the support using gas phase or liquid phase technique, such as impregnation from an organic solution, preferably gas phase technique. Any blocking agents known in the art may be used and the suitable ones are selected from compounds, which during final handling can be completely removed from the support surface, preferably such as alcohols, acetylacetone (acacH) or 2,2,6,6-tetramethyl-3,5-heptanedione (thdH), or the blocking agents may leave elements on the surface of the support, common with the support material itself, preferably such as precursors of silicon oxide, aluminum oxide, titanium oxide, zirconium oxide, tungsten oxide and magnesium oxide. The preferable silicon oxide, aluminum oxide, titanium oxide, zirconium oxide, tungsten oxide and magnesium oxide precursors are presented in the following.

Silicon oxide

Preferable silicon compounds are, for example, silicon tetrachloride $SiCl_4$, silicon alkoxides, such as tetramethoxysilane $Si(OMe)_4$ and tetraethoxysilane $Si(OEt)_4$, and compounds formed by silicon and organic compounds, such as hexamethyldisilazane (HMDS) $(CH_3)_3Si-NH-Si(CH_3)_3$ or hexamethyldisiloxane (HMDSO) $(CH_3)_3Si-O-Si(CH_3)_3$.

Aluminum oxide

Preferable aluminum compounds are, for example, aluminum chloride $AlCl_3$ or metalorganic compounds, such as aluminum ethoxide $Al(OEt)_3$, aluminum (III) acetylacetonate $Al(C_5H_7O_2)_3$, tris(2,2,6,6,-tetramethyl-3,5-heptanedionato)aluminum $Al(C_{11}H_{19}O_2)_3$, or organometallic compounds, such as trimethylaluminum (TMA) $Al(CH_3)_3$ and triethylaluminum $Al(C_2H_5)_3$.

Titanium oxide

Preferable titanium compounds are titanium tetrachloride $TiCl_4$ and titanium isopropoxide $Ti(OCH(CH_3)_2)_4$.

Zirconium oxide

A preferable zirconium compound is zirconium tetrachloride $ZrCl_4$.

Tungsten oxide

Preferable tungsten compounds are tungsten oxychloride $WOCl_4$ and tungsten hexachloride $WCl_6$.

Magnesium oxide

A preferable magnesium compound is tris(2,2,6,6-tetramethyl-3,5-heptanedionato)-magnesium $Mg(C_{11}H_{19}O_2)_2$.

In the second process step the precursor selected from volatile metal compounds, preferably (trimethyl)methyl cyclopentadienyl platinum $(CH_3)_3(CH_3C_5H_4)Pt$, is vaporised at a temperature of 323-573 K, preferably 343-473 K and it is allowed to react with the support, preferably as a fixed or fluidised bed of the support, and the support has been stabilised at a temperature of 323-573 K, preferably 373-573 K. The precursor is vaporised in amounts sufficiently high to ensure the desired noble metal content on the support. The amount of the noble metal deposited on the support varies between 0.01-20 wt%, preferably 0.01-5 wt%.

In the third process step final handling is carried out by a heat-treatment performed at oxidising or reducing conditions.

After the final handling the formulation of the catalyst material with a carrier and/or binder can be performed using methods known in the state of the art, such as grinding, tabletting, granulating or extruding.

The gas phase processing of the catalyst material can be carried out in a conventional fixed bed reactor, in a fluidised bed reactor or in any other reactors known in the state of the art. The gas phase reaction can be performed in closed reactor systems or in open reactor systems.

The obtained noble metal catalyst exhibits the following characteristic features: the catalyst activates carbon monoxide at temperatures below 323 K and it is highly dispersed which is illustrated in example 19. The noble metal content in the catalyst manufactured according to the invention is low.

The catalyst manufactured according to the invention performs well in hydrocarbon conversion reactions such as ring-opening, isomerisation, alkylation, hydrocarbon reforming, dry-reforming and dehydrogenation reactions, and particularly it is suitable for ring-opening of naphthenic molecules.

The noble metal catalyst manufactured according to the invention has several further advantages. It is stable, more effective and selective in reactions such as ring-opening, isomerisation, alkylation, hydrocarbon reforming, dry reforming, hydrogenation and dehydrogenation reactions, and it can be used in smaller amounts to achieve high conversions. Additionally it causes less cracking than catalysts according to the state of the art and it can be easily regenerated.

The method according to the present invention, for the manufacture of the noble metal catalyst, is simpler, it requires less process steps than conventional liquid phase methods, it can be performed in a single apparatus and the manufacture is less expensive as less noble metal is needed. Further, this is a novel method for the manufacture of ring-opening catalysts, as earlier catalysts have not been prepared by gas phase technique.

The noble metal catalyst is particularly suitable for the process for the manufacture of middle distillates. In the process for the manufacture of middle distillate diesel fuel a middle distillate feedstock is transferred to a reactor wherein it is allowed to react at a temperature of 283 - 673 K and under a pressure of 10 - 200 bar with hydrogen in the presence of the noble metal catalyst according to the invention to accomplish opening of naphthenes with two and multiple rings to produce isoparaffins, n-paraffins and mononaphthenes in the middle distillate region. The volume of middle distillate diesel fuels can be increased and higher cetane numbers can be achieved when the catalyst according to the invention is used in a reaction where multi-ring naphthenes are converted into mono-ring naphthenes and paraffins.

The invention is illustrated in more detail with the following examples, however to which the scope of the invention is not meant to be limited.

## Examples

For the manufacture of noble metal catalysts by impregnation (comparative examples) and by gas phase technique (examples according to the invention) the supports, commercial beta-zeolite and MCM-41, which was supplied by Åbo Akademie University, Finland, were sieved to a particle size of 75 - 150 $\mu$m and dried overnight at 423 K. The platinum contents of the catalysts were determined by ICP (Inductively coupled plasma emission). The prepared catalysts were characterised by dispersion measured by CO-adsorption analysis. In the analysis the sample (100-200 mg) was inserted in a quartz U-tube and reduced in $H_2$ stream (20 ml/min). A ramp rate of 10 K/min was applied and the temperature was linearly raised to a final temperature of 573 K, where it was held for 120 min. Then the specimen was cooled to 300 K under flowing He (purity 99.9999 %), and when the baseline was stable the experiment was started. Pulses of CO (purity 99.997 %) were repeated until the adsorption was saturated. The exhaust gas was analysed with infrared spectroscopy (IR) and with mass spectrometry (MS).

### Example 1 (comparative example)

Manufacture of platinum loaded beta-zeolite catalyst (Pt-beta-1) by conventional incipient wetness impregnation
Platinum loaded beta-zeolite catalyst (Pt-beta-1) was prepared by conventional incipient wetness impregnation of standardised metal solutions. The platinum precursor was tetraammineplatinum(II) nitrate $[Pt(NH_3)_4](NO_3)_2]$. The catalyst was calcined at 623 K in air and reduced under hydrogen at 573 K. The platinum content was 0.5 wt%. The dispersion measured by CO adsorption was 45 %.

### Example 2 (comparative example)

Manufacture of platinum loaded beta-zeolite catalyst (Pt-beta-2) by conventional incipient wetness impregnation
Platinum loaded beta-zeolite catalyst (Pt-beta-2) was prepared by conventional incipient wetness impregnation of standardised metal solutions. The platinum precursor was tetraammineplatinum(II) nitrate $[Pt(NH_3)_4](NO_3)_2]$. The catalyst was calcined at 623 K in air and reduced under hydrogen at 573 K. The platinum content was 4.7 wt%. The dispersion measured by CO adsorption was 24 %.

### Example 3 (comparative example)

Manufacture of platinum loaded beta-zeolite catalyst (Pt-beta-3) by conventional incipient wetness impregnation
Platinum loaded beta-zeolite catalyst (Pt-beta-3) was prepared by conventional incipient wetness impregnation of standardised metal solutions. The platinum precursor was tetraammineplatinum(II) chloride $[Pt(NH_3)_4]Cl_2]$. The catalyst was calcined at 623 K in air and reduced under hydrogen at 573 K. The platinum content was 0.5 wt%.

### Example 4 (comparative example)

Manufacture of platinum loaded beta-zeolite by conventional ion-exchange procedure
Platinum loaded beta-zeolite was prepared by an ion-exchange procedure as follows. 10 g of H-beta-zeolite was weighed to a 2 1 flask and 11 of ion-exchanged water was added. 52 ml of 0.01 M Pt-solution was measured to a drop funnel and the Pt-solution was dropped slowly (about 15 drops/min) to the flask at a temperature of 343 K and with shaking. The mixture was filtered. The impregnated zeolite was washed with ion-exchanged water, refiltered and placed into an oven at a temperature of 353 K for 16 hours. The obtained catalyst was calcined in an oven at 573 K. The platinum content of the catalyst was 0.11 wt%.

### Examples 5 - 7

Manufacture of platinum catalysts on beta-zeolite and mesoporous MCM-41 by gas phase deposition technique according to the invention
Platinum catalysts were prepared on beta-zeolite and mesoporous MCM-41 by gas phase deposition using (trimethyl)methyl cyclopentadienyl platinum (IV) as the precursor (purity 99 %). The processing was carried out in a flow-type reactor at reduced pressure of about 5-10 kPa with nitrogen as carrier gas. Before the deposition the supports were preheated at 673 K in a muffle furnace under atmospheric pressure for 16 hours. Additionally, they were heated *in situ* in the reactor at 473 - 673 K for 3 hours to remove water adsorbed during their transfer to the reactor. The precursor

$(CH_3)_3(CH_3C_5H_4)Pt$ was vaporised at 343 K and allowed to react at 373 K with a fixed bed of the support that had been stabilised to the same temperature. The reaction was completed with a nitrogen purge at the reaction temperature. In the final handling step the catalysts were calcined in air at 623 K.

In the following table 1 the properties of the platinum catalysts prepared from gas phase using $(CH_3)_3(CH_3C_5H_4)$ Pt are presented (examples 5 - 7). Saturated deposition in the table means that the metal precursor was allowed to react with all available adsorption sites on the support.

**Table 1.** Platinum catalysts prepared from gas phase using $(CH_3)_3(CH_3C_5H_4)Pt$

| Example | Support | Pt, wt% | Comments |
|---|---|---|---|
| Example 5 | H-beta | 0.06 | Unsaturated deposition |
| Example 6 | H-beta | 6.4 | Saturated deposition |
| Example 7 | MCM-41 | 4.9 | Saturated deposition |

## Examples 8 - 11

Manufacture of $Pt/Al_2O_3$ catalysts by saturating gas-solid reactions using $Pt(acac)_2$ according to the invention and effect of blocking

When saturating gas-solid reactions were utilised, the amount of the required metal could be reduced by blocking part of the available surface sites. The nature of the blocking agent influenced the extent of blocking. This can be seen from following table 2, wherein the blocking reaction conditions and Pt content of the obtained Pt catalysts are presented (examples 8 - 11). The catalysts were prepared by saturating gas-solid reactions using $Pt(acac)_2$.

**Table 2.** $Pt/Al_2O_3$ catalysts prepared by saturating gas-solid reactions using $Pt(acac)_2$.

| | Blocking reaction | | | Pt, wt% |
|---|---|---|---|---|
| | Reagent | Vaporization temperature, K | Reaction temperature, K | |
| Example 8 | no | - | - | 9.0 |
| Example 9 | ThdH | 323 - 333 | 473 | 4.2 |
| Example 10 | HMDS | 353 | 453 | 2.7 |
| Example 11 | $Al(acac)_3$ | 463 | 463 | 1.2 |

| | | |
|---|---|---|
| thdH = | 2,2,6,6-tetramethyl-3,5-heptanedione | (CAS-nro 1118-71-4) |
| HMDS = | hexamethyldisilazane, $(CH_3)_3Si\text{-}NH\text{-}Si(CH_3)_3$ | (CAS-nro 999-97-3) |
| $Al(acac)_3$ = | aluminum acetylacetonate, $Al(C_5H_7O_2)_3$ | (CAS-nro 13963-57-0) |
| $Pt(acac)_2$ = | platinum acetylaacetonate, $Pt(C_5H_7O_2)_2$ | (CAS-nro 15170-57-7) |

The processing was carried out in a flow-type reactor at reduced pressure of about 5-10 kPa with nitrogen as carrier gas. Before the deposition the supports (zeolites) were preheated at 873 K in a muffle furnace under atmospheric pressure for 16 hours. Additionally, they were heated *in situ* in the reactor at 453 - 473 K for 3 hours to remove water adsorbed during their transfer to the reactor. The reaction of the blocking reagent and the reaction of $Pt(acac)_2$ were carried out as successive reactions, each reaction step being completed with a nitrogen purge at the reaction temperature concerned. The vaporisation and reaction temperatures of the blocking reagents are given in Table 2. The platinum precursor, $Pt(acac)_2$, was vaporised and allowed to react with the modified support at 453 K. The amount of vaporised blocking/platinum reagent was kept sufficiently high to ensure saturation of the surface. The ligands were removed by a post-treatment in synthetic air at 623 or 723 K. The blocking reagents were totally removed (thdH) or formed silicon oxide (from HMDS) or aluminum oxide (from $Al(acac)_3$) were left on the support surface.

## Examples 12 - 17

Decalin ring-opening reaction using noble metal catalysts

The performance of the catalysts in decalin ring-opening reaction was tested in a 50 ml autoclave at 523 K under 20 bar hydrogen pressure. Decalin (10 ml -9.0 g) was added to a reactor containing 1 g at 523 K reduced catalyst at room temperature. The pressure was increased with hydrogen to 10 bar. Then the reactor was put into an oil bath at 523 K and when the temperature of the reactor reached 523 K, the hydrogen pressure was adjusted to 20 bar. The reaction time was five hours. Then the reactor was cooled rapidly to a temperature of 263 K and the reactor was weighted after the cooling. The pressure in autoclave was released and the product with catalyst was taken to a sample vessel for GC testing. The results of the test runs are summarized in following table 3. The conversion, selectivity and yield were calculated with the following formula:

$$\text{Conversion (\%)} = \frac{100 \times (\text{initial decalin (wt\%)} - \text{decalin in product (wt\%)}}{(\text{initial decalin (wt\%)})} \qquad (1)$$

$$\text{Selectivity (\%)} = \frac{100 * \text{amount of product (wt\%)}}{\text{amount of all products (wt\%)}} \qquad (2)$$

$$\text{Yield (\%)} \quad = \quad \text{Conversion} \times \text{Selectivity}/100 \qquad (3)$$

Table 3. Comparison of noble metal catalysts in ring-opening reaction of decalin.

| Catalyst | Example | Conversion, % | Selectivity to ROP* products, % | Yield to ROP* products, % | Selectivity to cracking products (< C10), % |
|---|---|---|---|---|---|
| Pt-beta prepared in Example 1 | 12 | 87 | 27 | 23 | 8 |
| Pt-beta prepared in Example 2 | 13 | 89 | 19 | 17 | 8 |
| Pt-beta prepared in Example 3 | 14 | 90 | 18 | 16 | 13 |
| Pt-beta prepared in Example 4 | 15 | 87 | 28 | 24 | 5 |
| Pt- beta prepared in Example 5 | 16 | 90 | 36 | 32 | 5 |
| Pt-beta prepared in Example 6 | 17 | 86 | 32 | 28 | 3 |
| * ROP products = ring-opening products | | | | | |

## Example 18

Formation of carbon dioxide on the catalyst manufactured according to the invention

Carbon dioxide was formed on the catalyst prepared according to example 6 during CO adsorption at 300 K.

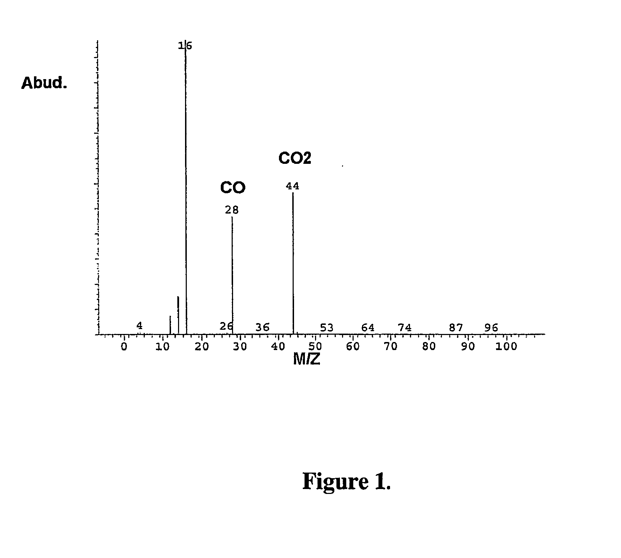

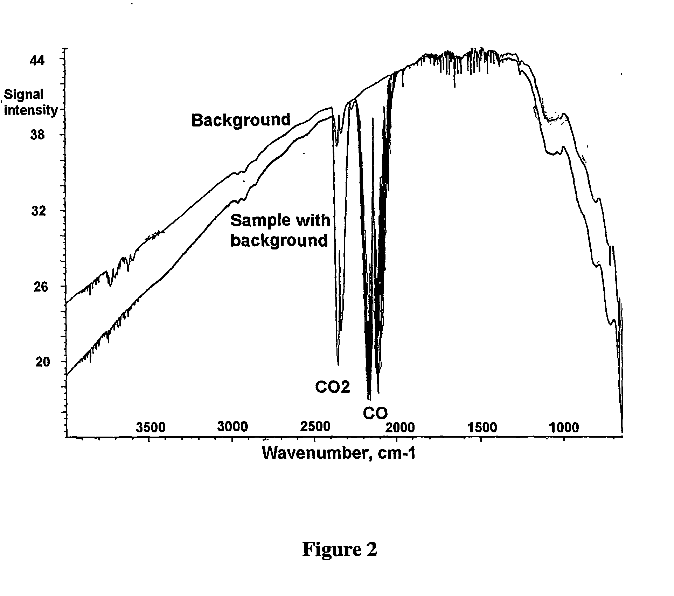

In Figure 1 the mass spectrum of exhaust gas in CO adsorption is shown. The x-axis is the mass number and y-axis the abundance of the component. Figure 2 presents the IR spectrum of the exhaust gas in CO adsorption. The x-axis is the wave number and the y-axis the signal intensity.

## Example 19

Deactivation of the catalysts

The deactivation of the catalysts from examples 6 and 7 was tested with a hydrodesul-phurised refinery feed sample (total aromatics content 30.6 wt%, sulphur < 10 ppm). The results in the following table 4 show that the deactivation of the catalysts manufac-tured by the method according to the invention (6.4Pt/H-beta example 6 and 4.9Pt/MCM-41 example 9) is much slower than with comparative catalyst, Pt-beta-1 (example 1), prepared by dry impregnation method.

Table 4. Deactivation of catalysts with the refinery feed

| Catalyst | Example | Testing temperature, K | Catalyst age, g |
|---|---|---|---|
| Pt-beta-1 | 1 | 503 | <100 |
| 6.4 Pt/H-beta | 6 | 503 | ~500 |
| 4.9 Pt/MCM-41 | 7 | 553 - 573 | >>1000 |

## Example 20

Product analysis

The product analysis of test runs with 4.9Pt/MCM-41 (from example 7) and 6.4Pt/H-beta (from example 6), from the previous example 19, compared to the feed are presented in the following table 5. The gasoline fractions (bp<180°C) were distilled away before analysis. The amounts of distilled fractions were 2.2 wt% for 4.9Pt/MCM-41 at 553 K, 2.6 wt% for 4.9Pt/MCM-41 at 573 K and 2.5 wt% for 6.4Pt/H-beta at 503 K, respectively. The results reveal that nearly complete hydrogenation of aromatics was achieved. The other changes in product quality were very similar with both catalysts tested.

Table 5. Product analysis of 4.9Pt/MCM-41 and 6.4Pt/H-beta catalysts test runs

|  | Ex | Testing temperature, | Density change, | Cloud point change, ° | IQT cetane number change | Arom, hydrogenation | | |
|---|---|---|---|---|---|---|---|---|
|  |  |  |  |  |  | mono | di | tri |
| Catalyst |  | K | Kg/m3 |  |  | % | % | % |
| 4.9Pt/MCM-41 | 7 | 553 | -13,2 | +1,0 | +3,7 | 94 | 100 | 100 |
| 4.9Pt/MCM-41 | 7 | 573 | -14,2 | +1,2 | +4,4 | 92 | 100 | 100 |
| 6.4Pt/H-beta | 6 | 503 | -14,0 | +1,2 | +3,9 | 79 | 100 | 100 |

## Claims

1.   A method for the manufacture of a noble metal catalyst for hydrocarbon conversion, **characterized in that** the method comprises the following steps:

   a) Pre-treatment of a support comprising a zeolite selected from medium and large pore zeolites having acid sites, at a temperature between 423 - 1173 K, and optional modification of the support;
   b) Deposition of a noble metal selected from platinum, palladium, ruthenium, rhodium, iridium and mixtures and combinations thereof by gas phase deposition technique comprising vaporisation of the noble metal precursor selected from β-diketonates and metallocenes and reaction with the support, and
   c) Heat treatment at oxidising or reducing conditions.

2. The method according to claim 1, **characterized in that** the noble metal is platinum.

3. The method according to claim 1 or 2, **characterized in that** the zeolite is selected from large pore zeolites having weak or medium strength of acid sites.

4. The method according to any one of claims 1 - 3, **characterized in that** the zeolite is selected from mesoporous aluminosilicates, crystalline aluminosilicates, crystalline aluminophosphates and crystalline aluminosilicophosphates.

5. The method according to any one of claims 1 - 4, **characterized in that** the zeolite is selected from MCM-41, Y- and beta-zeolites, mordenites, AlPO-5 and AlPO-11, SAPO-5 and SAPO-11.

6. The method according to any one of claims 1 - 5, **characterized in that** the support further comprises inorganic oxide, carbon related material or mixtures or combinations thereof.

7. The method according to claim 6, **characterized in that** the inorganic oxide is selected from silicon oxide, aluminum oxide, titanium oxide, zirconium oxide, tungsten oxide and magnesium oxide, preferably from silicon oxide and aluminum oxide.

8. The method according to claim 6, **characterized in that** the carbon related material is selected from activated carbon, graphite and carbon nanotubes.

9. The method according to any one of claims 1 - 8, **characterized in that** the noble metal precursor is $(CH_3)_3(CH_3C_5H_4)$ Pt.

10. The method according to any one of claims 1 - 9, **characterized in that** the zeolite is MCM-41.

11. The method according to any one of claims 1 - 10, **characterized in that** in the first process step a) the support is pre-treated at a temperature of 423-1173 K, and in the second step b) the deposition is carried out in the presence of an inert carrier gas.

12. The method according to claim 11, **characterized in that** the inert carrier gas is nitrogen, helium, argon or methane.

13. The method according to any one of claims 1 - 12, **characterized in that** the modification in the first step a) is carried out by blocking part of available surface sites on the support with a blocking agent selected from alcohols, acetyl acetone, 2,2,6,6-tetramethyl-3,5-heptanedione, precursor of silicon oxide, aluminum oxide, titanium oxide, zirconium oxide, tungsten oxide and magnesium oxide, and nitrates.

14. The method according to claim 13, **characterized in that** the blocking agent is silicon tetrachloride, tetramethoxysilane, tetraethoxysilane, hexamethyldisilazane, hexamethyldisiloxane, aluminum chloride, aluminum ethoxide, aluminum (III) acetylacetonate, tris(2,2,6,6,-tetramethyl-3,5-heptanedionato)aluminum, trimethyl aluminum, triethyl aluminum, titanium tetrachloride, titanium isopropoxide, zirconium tetrachloride, tungsten oxychloride, tungsten hexachloride or tris(2,2,6,6-tetramethyl-3,5-heptanedionato) magnesium.

15. Use of the noble metal catalyst manufactured according to the method of any one of claims 1 - 14 in ring-opening reactions, preferably in ring-opening of naphthenic molecules.

16. A process for the manufacture of middle distillate diesel fuel, **characterized in that** a middle distillate feedstock is transferred to a reactor wherein it is allowed to react at a temperature of 283 - 673 K and under a pressure of 10 - 200 bar with hydrogen in the presence of a noble metal catalyst manufactured according to the method of any one of claims 1-14 to accomplish opening of naphthenes with two and multiple rings to produce isoparaffins, n-paraffins and mononaphthenes in the middle distillate region.

**Patentansprüche**

1. Verfahren zur Herstellung eines Edelmetal-Katalysators zur Umwandlung von Kohlenwasserstoffe, **dadurch gekennzeichnet, dass** das Verfahren die folgenden Schritte aufweist

a) Vorbehandlung eines Zeolith enthaltenden Trägers, wobei das Zeolith aus Zeolithen mit mittleren und großen Poren und mit sauren Stellen ausgewählt ist, bei einer Temperatur von 423 bis 1173 K, und gegebenenfalls Modifikation des Trägers;

b) Ablagerung eines Edelmetalls, ausgewählt aus Platin, Palladium, Ruthenium, Rhodium, Iridium, und deren Gemische und Kombinationen, durch Ablagerungstechnik in der Glasphase, umfassend eine Verdampfung der Edelmetall-Vorstufe, auswählt aus β-Diketonaten und Metallocenen, und Umsetzung mit dem Träger, und

c) Wärmebehandlung bei oxidierenden oder reduzierenden Bedingungen.

2. Verfahren nach Anspruch 1, **dadurch gekennzeichnet, dass** das Edelmetall Platin ist.

3. Verfahren nach Anspruch 1 oder 2, **dadurch gekennzeichnet, dass** das Zeolith aus Zeolithen mit großen Poren und mit schwach sauren oder mittelstark sauren Stellen ausgewählt ist.

4. Verfahren nach einem der Ansprüche 1-3, **dadurch gekennzeichnet, dass** das Zeolith aus mesoporösen Aluminosilikaten, kristallinen Aluminosilikaten, kristallinen Aluminophosphaten und kristallinen Aluminosilikophosphaten ausgewählt ist.

5. Verfahren nach einem der Ansprüche 1-4, **dadurch gekennzeichnet, dass** das Zeolith aus MCM-41, Y- und beta-Zeolithen, Mordeniten, AIPO-5 und AIPO-11, SAPO-5 und SAPO-11 ausgewählt ist.

6. Verfahren nach einem der Ansprüche 1-5, **dadurch gekennzeichnet, dass** der Träger weiter ein anorganisches Oxid, Kohlenstoffbezogenes Material oder deren Gemische oder Kombinationen aufweist.

7. Verfahren nach Anspruch 6, **dadurch gekennzeichnet, dass** das anorganische Oxid aus Siliziumoxid, Alumi-numoxid, Titaniumoxid, Zirkoniumoxid, Wolframoxid und Magnesiumoxid, vorzugsweise aus Siliziumoxid und Aluminiumoxid ausgewählt ist.

8. Verfahren nach Anspruch 6, **dadurch gekennzeichnet, dass** das Kohlenstoffbezogenes Material aus aktivierten Kohlenstoff, Grafit und Kohlenstoff-Nanoröhrchen ausgewählt ist.

9. Verfahren nach einem der Ansprüche 1-8, **dadurch gekennzeichnet, dass** die Edelmetall-Vorstufe $(CH_3)$ $(CH_3C_5H_4)Pt$ ist.

10. Verfahren nach einem der Ansprüche 1-9, **dadurch gekennzeichnet, dass** das Zeolith MCM-41 ist.

11. Verfahren nach einem der Ansprüche 1-10, **dadurch gekennzeichnet, dass** der Träger im ersten Verfahrensschritt a) bei einer Temperatur von 423-1173 K vorbehandelt wird, und die Ablagerung im zweiten Verfahrensschritt b) in Anwesenheit eines inerten Trägergases durchgeführt wird.

12. Verfahren nach Anspruch 11, **dadurch gekennzeichet, dass** das inerte Trägergas Stickstoff, Helium, Argon oder Methan ist.

13. Verfahren nach einem der Ansprüche 1-12, **dadurch gekennzeichnet, dass** die Umwandlung im ersten Schritt a) durch Blockieren eines Teils der auf der Oberfläche des Trägers zur Verfügung stehenden Stellen mit einem Blok-kiermittel, das aus Alkoholen, Acetylaceton, 2,2,6,6-Tetramethyl-3,5-heptadion, Vorstufen des Siliziumoxids, Aluminiumoxids, Titaniumoxids, Zirkoniumoxid, Wolframoxids und Magnesiumoxid, und Nitraten ausgewählt ist.

14. Verfahren nach Anspruch 13, **dadurch gekennzeichnet, dass** das Blockiermittel Siliziumtetrachlorid, Tetramethoxysilan, Tetraethoxysilan, Hexamethyldisilazan, Hexamethyldisiloxan, Aluminiumchlorid, Aluminiumethoxid, Aluminium(II)acetylacetonat, Tris(2,2,6,6-tetramethyl-3,5-heptandionato)aluminium, Trimethylaluminium, Triethylaluminium, Titantetrachlorid, Titanisopropoxid, Zirconiumtetrachlorid, Wolframoxychlorid, Wolframhexachlorid oder Tris(2,2,6,6,-tetramethyl,3,5-heptandionato)-magnesium ist.

15. Verwendung des Edelmetall-Katalysators, der gemäß des Verfahrens nach einem der Ansprüche 1-14 hergestellt ist, in Reaktionen zur Ringöffnung, vorzugsweise zur Ringöffnung der Naphthalenmoleküle.

16. Verfahren zur Herstellung von Dieselkraftstoff als mittleres Destillat, **dadurch gekennzeichnet, dass** das Ausgangsmaterial für das Destillat in einen Reaktor eingeleitet wird, in dem das Ausgangsmaterial bei einer Temperatur von 283 bis 673 K und bei eines Druckes von 10 bis 200 bar mit Wasserstoff in Anwesenheit des Edelmetall-Katalysators, der gemäß des Verfahrens nach einem der Ansprüche 1-14 hergestellt ist, zum Öffnen von Naphthenen mit zwei und mehreren Ringen zur Herstellung von Isoparaffinen und n-Paraffinen und Mononaphthenen im Bereich des mittleren Destillats umgesetzt wird.

**Revendications**

1. Procédé de preparation d'un catalyseur à base de métal noble pour la conversion des hydrocarbures, **caractérisé en ce que** le procédé comprend les operations suivantes:

   a) prétraitement d'un support comprenant de zéolithe sélectionné dans la groupe des zéolithes à pores moyens et larges, et avec sites acides, à la température entre 423 et 1173 K, et modification eventuelle de ce support;
   b) déposition d'un métal noble sélectionné dans la groupe des métaux platinium, palladium, ruthénium, rhodium, iridium et leur mélanges et combinaisons par la téchnique de déposition en phase gazeuse, comprenant la vaporisation d'un précurseur du métal noble sélectionné dans la groupe des β-dicétonates et métallocènes, et la réaction avec le support, et
   c) traitement thérmal aux conditions oxydantes ou réduisantes.

2. Procédé selon la revendication 1, **caractérisé en ce que** le métal noble est platinium.

3. Procédé selon la revendication 1 ou 2, **caractérisé en ce que** le zéolithe est sélectionné dans la groupe des zéolithes à pores larges, et avec sites à faible ou moyenne force acide.

4. Procédé selon l'une quelconque des revendications 1-3, **caractérisé en ce que** le zéolithe est sélectionné dans la groupe des aluminosilicates mésoporeux, aluminosilicates cristallins, aluminophosphates cristallins et alumino silicophosphates.

5. Procédé selon l'une quelconque des revendications 1-4, **caractérisé en ce que** le zéolithe est sélectionné dans la groupe des MCM-41, Y et beta zéolithes, mordénites, AIPO-5 et AIPO-11, SAPO-5 et SAPO-11.

6. Procédé selon l'une quelconque des revendications 1-5, **caractérisé en ce que** le support contient en outre un oxyde inorganique, matière carbonée et leur mélanges ou combinaisons.

7. Procédé selon la revendication 6, **caractérisé en ce que** l'oxyde inorganique est sélectionné dans la groupe des oxydes de silicium, aluminium, titane, zirconium, tungstène et magnésium, préférentiellement des oxydes de silice et aluminium.

8. Procédé selon la revendication 6, **caracterisé en ce que** matière carbonée est sélectionné dans la groupe des charbon actif, graphite et charbon nanotubulaire.

9. Procédé selon l'une quelconque des revendications 1-8, **caracterisé en ce que** le précurseur du métal noble est $(CH_3)_3(CH_3C_5H_4)Pt$.

10. Procédé selon l'une quelconque des revendications 1-9, **caracterisé en ce que** le zéolithe est MCM-41.

11. Procédé selon l'une quelconque des revendications 1-10, **caracterisé en ce que** la première opération du procédé de prétraitement du support a) est effectuée à la température de 432 à 1173 K, et la seconde opération du procédé de déposition b) est effectuée en présence d'un gaz inerte porteur.

12. Procédé selon la revendication 11, **caracterisé en ce que** le gaz inerte porteur est azote, helium, argon ou méthane.

13. Procédé selon l'une quelconque des revendications 1-12, **caracterisé en ce que** la modification dans la première opération a) est effectuée par le blocage d'une part des sites de surface disponibles sur le support avec un agent de blocage sélectionné dans la groupe des alcools, acétone d'acétyle, 2,2,6,6-tétraméthyle-3,5-heptanedione, précurseurs des oxydes de silicium, aluminium, titane, zirkonium, tungstène et magnésium, et nitrates.

14. Procédé selon la revendication 13, **caracterisé en ce que** l'agent de blocage est tétrachlorure de silicium, tétraméthoxysilane, tétraéthoxysilane, héxaméthylsilazane, héxaméthyldisiloxane, chlorure d'aluminium, éthoxyde d'aluminium, acétylacétonate d'aluminium(III), tris(2,2,6,6-tétraméthyle-3,5-heptanedionato) d'aluminium, triméthylaluminium, triéthylaluminium, tétrachlorure de titane, isopropoxide de titane, tétrachlorure de zirconium, oxychlorure de tungstène, hexachlorure de tungstène, ou tris(2,2,6,6-tétraméthyle-3,5-heptanedionato) d'magnésium.

15. Utilisation d'un catalyseur à base de métal noble préparé selon l'une quelconque des revendications 1-14 dans des réaction d'ouvertures du cycle, préferentiellement dans des réactions d'ouverture des cycles des molécules de naphtalène.

16. Procédé de préparation de distillat moyen comme carburant diesel, **caracterisé en ce que** la matière première pour le distillat moyen est transférée dans un réacteur pour la faire réagir à la température de 283 à 673 K et à la pression de 10 à 200 bar avec hydrogène en présence d'un catalyseur à base de métal noble préparé selon l'une quelconque des revendications 1-14 pour effectuer l'ouverture des naphténes à deux et plusieurs cycles pour la production des isoparaffines, n-paraffines et mononaphtalènes dans la région des distillats moyens.

**Figure 1.**

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9967022 A
- WO 9110510 A
- FI 913438
- US 6235962 B
- WO 0008156 A
- WO 0008157 A
- WO 0008158 A
- WO 0207881 A
- US 20020121457 A
- WO 0040676 A
- WO 0207877 A

**Non-patent literature cited in the description**

- **Dossi et al.** *J. Catal.,* 1994, vol. 145, 377-383
- *J. Catal.,* 1994, vol. 149, 92-99
- **Lashdaf et al.** *Appl. Catal.,* 2003, vol. A241, 51-63
- **Mu et al.** *Appl. Catal.,* 2003, vol. A248, 85-95
- **Bourane ; Bianchi.** *J. Catal.,* 2003, vol. 218, 447-452